# EUROPEAN PATENT SPECIFICATION

(11) **EP 2 315 933 B1**
(45) Date of publication and mention of the grant of the patent: **29.05.2013**
(21) Application number: 09773797.7
(22) Date of filing: 12.06.2009
(51) Int. Cl.: F03B 3/14

(54) **Device for controlling blade pitch of water turbines**
Vorrichtung zum Einstellen des Einstellwinkels eines Rotorblattes einer Wasserturbine
Dispositif de réglage du pas de l'hélice pour turbine à eau

(30) Priority: 03.07.2008 NO 20083014
(43) Date of publication of application: 04.05.2011
(73) Proprietor: Hydra Tidal Energy Technology AS, 9484 Harstad (NO)
(72) Inventor: HENRIKSEN, Svein, Dag, N-9405 Harstad (NO)
(74) Representative: Onsagers AS
(86) International application number: PCT/NO2009/000220
(87) International publication number: WO 2010/002264

(56) References cited:
- EP-A1- 1 215 393
- GB-A- 750 951
- GB-A- 892 729
- GB-A- 2 071 779

## Description

The invention relates to turbine systems of the variable pitch type, and particularly to a device for controlling a turbine blade pitch of turbines for generation of electricity from currents in water. More particularly, the invention relates to a system for selectively adjusting the pitch of water current turbine blades.

Variable pitch turbine blade systems typically incorporate a plurality of turbine blades mounted to a rotary hub connected to a drive shaft. Each turbine blade extends radially outwardly from the hub along the longitudinal axis of the blade. In order to permit pitch adjustment, each blade is mounted to the hub for pivotable movement about its longitudinal axis. The hub typically encloses a chamber within its interior wherein a pitch change actuation system is disposed which is operatively connected to the turbine blades. The actuation system functions to selectively change the pitch of the blades, therefore altering fluid resistance to the rotation of the blades to thereby control the rotational speed of the shaft.

The state of the art includes GB 892 729 A, which describes an apparatus for controlling a turbine blade pitch, comprising a turbine blade spindle, pitch adjustment gear and an actuator connected to the spindle so as to rotate the spindle about its longitudinal axis.

In the case of a variable pitch turbine system for a power plant for generating electrical energy from currents in water (e.g. tidal current), the turbines are rotated by the water currents and this rotation is transferred to the plant's generator via the hub and the drive shaft. The turbine blade pitch is adjusted by pivoting the blades about their longitudinal axes, thereby enabling the water current turbine to perform at maximum efficiency in varying water current conditions, as well as aiding in the start-up of the turbine, and, by feathering of the blades, preventing overspeed operation of the turbine in high water current velocities.

Plants for generating energy from currents in water are sometimes placed with generators submerged in waters having predominant currents, such as tidal currents where the water current direction is reversed at certain intervals, in phase with the ebb and flow. Variable pitch turbine systems for plants of this type are sometimes equipped with pitch adjustment systems that allow a 180° rotation of each individual turbine blade about its longitudinal axis. From time to time the need arises for feathering the turbine blades. This may be in order to prevent overspeed, or in connection with plant shut-down.

The purpose of the invention is to provide a device for performing a turbine blade feathering operation in a rapid, predictable and reliable manner.

The present invention provides a device for controlling a turbine blade pitch as recited in claim 1, comprising a turbine blade spindle for connection to the turbine blade, said spindle having a longitudinal axis for alignment with the turbine blade longitudinal axis and rotatably connected to a support element; an actuator connected to the spindle and via an actuation element to the support element; and the actuator being operable between a retracted state and an extended state, whereby said operation of the actuator causes a rotation of the spindle about a spindle longitudinal axis.

The actuation element is preferably operable between a retracted state and an extended state, whereby said operation of the actuator causes a rotation of the spindle about a spindle longitudinal axis. In a preferred embodiment, the spindle comprises a connection element for connection to the actuator.

Preferably, the connection element comprises a first pivotal connection means for connection to the actuator, and the support element comprises a second pivotal connection means for connection to the actuator.

In a preferred embodiment, the support element comprises a toothed arc, which via a gear wheel and a bevel gear is connected to a pitch adjusting drive unit.

In a preferred embodiment, the actuator comprises a hydraulically operated actuator, or a solenoid actuator, and/or an actuator comprising one or more explosive charges or springs. Also in a preferred embodiment, the actuator is adapted to be operated independently of the pitch adjusting gear. The actuator may also be adapted to be operated concurrently with the pitch adjusting gear.

The invented device is particularly useful in a generator submerged in a body of water, for generating electricity from currents flowing past said submerged generator.

These and other characteristics of the invention will be clear from the following description of a preferential form of embodiment, given as a non-restrictive example, with reference to the attached drawings wherein:
Figure 1 is a sectional elevation view of a turbine nacelle, illustrating a preferred embodiment of the invention;
Figure 2 is a principle sketch illustrating the preferred embodiment of the invention;
Figure 3 is a perspective view of a preferred embodiment of the invention;
Figure 4 is a perspective view of certain components of a preferred embodiment of the invention, in a first position; and
Figure 5 is a perspective view of the components shown in figure 4, in a second position.

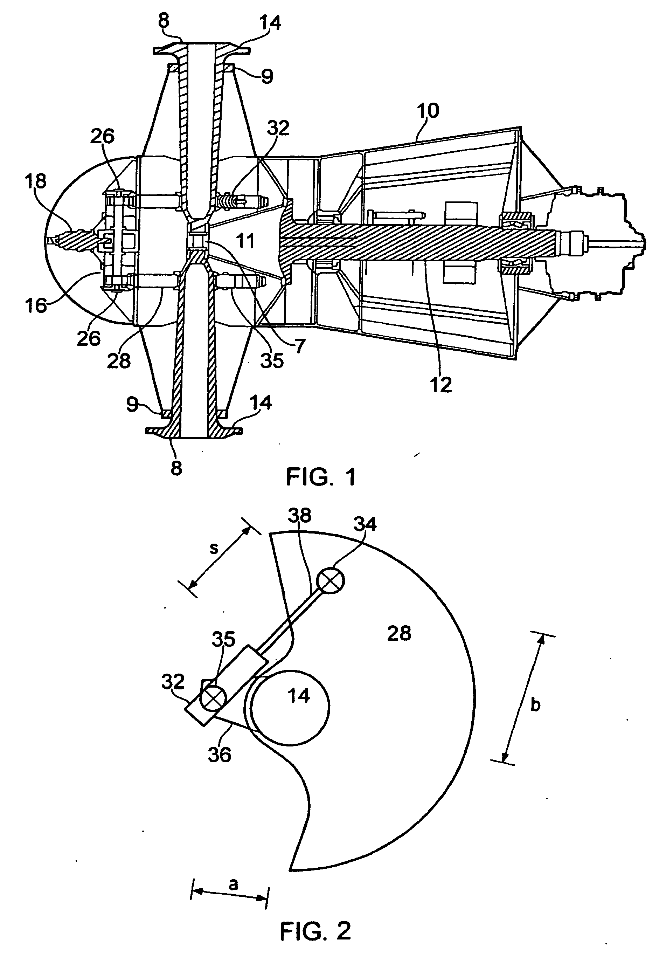

Figure 1 shows a preferred embodiment of the invention, incorporated in a nacelle or housing 10. A drive shaft 12 is connected at one end to a turbine hub 11 and at the other end to a generator (not shown) for generation of electricity from currents of water, such as tidal currents or similar. In the illustrated embodiment, the turbine hub comprises two turbine blade spindles 14, to each of the respective free ends 8 of which a turbine blade (not shown) normally is attached. For clarity of illustration the turbine blades are not shown in the figures, but the skilled person will understand that turbine blades are attached to the free end 8 of each spindle 14, such that the spindle's longitudinal axis is aligned with the turbine blade's longitudinal axis. Each spindle 14 is in the described embodiment supported by respective outer radial bearings 9 and inner bearing 7. The inner bearing 7 may be a combined thrust- and radial bearing. In the described embodiment, these bearings are water lubricated.

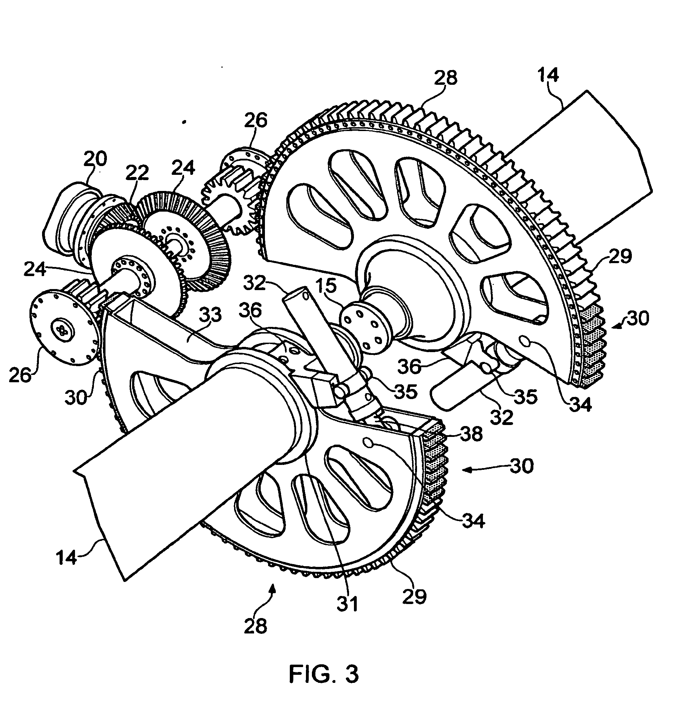

Figure 1 also illustrates the pitch adjusting drive unit 18, which in a conventional manner (hydraulically or electrically operated) is driving the turbine pitch adjusting gear 16. The pitch adjusting gear 16 is shown in more detail in figure 3.

Figure 3 shows a pitch adjusting axle 20 (which is connected to the pitch adjusting drive unit 18; not shown in figure 3) connected to a bevel gear comprising a pinion drive 22 and a crown wheel 24 for each turbine spindle 14 (only a part of which is shown in figure 3). Each crown wheel 24 is connected to a respective gear wheel 26 having teeth engaging corresponding teeth 29 on respective toothed circular segmental arc 28, hereinafter referred to as a toothed arc 28. The skilled person will understand that the toothed arc 28 may comprise a complete circular disc, without deviating from the scope of the invention. In the illustrated embodiment, the toothed arc 28 comprises a part-disk shaped structure, having teeth 29 along its circumference and two perforated side walls separated by an internal compartment 33.

Figure 3 also shows how each turbine blade spindle 14 is rotatably connected to its respective toothed arc 28. The turbine blade spindle 14 may rotate about its longitudinal axis in the appropriately configured support region 31 in the toothed arc 28. The spindle inner end 15 is connected to, and supported, by the above mentioned inner bearings 7 in a manner which is known in the art and therefore not illustrated nor discussed here.

Attached to the spindle 14 is a connection element 36, which in the illustrated embodiment is shown as an element fixed to the spindle 14 in the vicinity of the support region 31, positioned between parts of the toothed arc's two walls. The connection element 36 may be attached to the spindle 14 by means of screws or similar fastening means, or it may be formed integrally with the spindle 14. An actuator 32 is pivotally connected to the connection element 36 and thus to the spindle 14. The actuator 32 - which will be described in more detail below - comprises an actuator rod 38 (shown in a retracted state in figure 3) which at its free end is connected to the toothed arc 28 by means of a pivotal connection 34.

The spindles' rotational position - and thus the turbine pitch - may be adjusted by controllably actuating the pitch adjusting drive unit 18, thereby rotating the adjusting axle 20. The adjusting axle's rotational movement is transmitted via the bevel gear 22, 24 to the individual gear wheels 26 and the respective toothed arc 28. As the toothed arc 28 is connected to the spindle 14 via the actuator 32 (and its connections 34, 35, 36), the toothed arc's rotational movement is transferred directly to the spindle 14. Thus, the toothed arc 28 and the spindle 14 are in this operation in effect one single element, by virtue of the firm connection established between the toothed arc and the spindle by the actuator 32 and its connections (34, 35, 36).

The arc length of the toothed arc 28 determines the possible extent of rotation of each spindle 14 about its longitudinal axis, and thus the turbine blade pitch adjustment range. Thus, in the illustrated embodiment, the arc length of the toothed arc 28 allows a rotation of more than 180°. This feature is useful in order to e.g. account for reversed currents which e.g. may occur in tidal currents.

Adjusting the turbine blade pitch when the plant is in operation and the turbines are subjected to high thrust loads, requires that the teeth 29 on the toothed arc 28 are of high strength materials. This is illustrated in figures 3, 4 and 5 where arc regions 30 on both ends of the toothed arc 28 comprise high-strength materials, such as Duplex or similar.

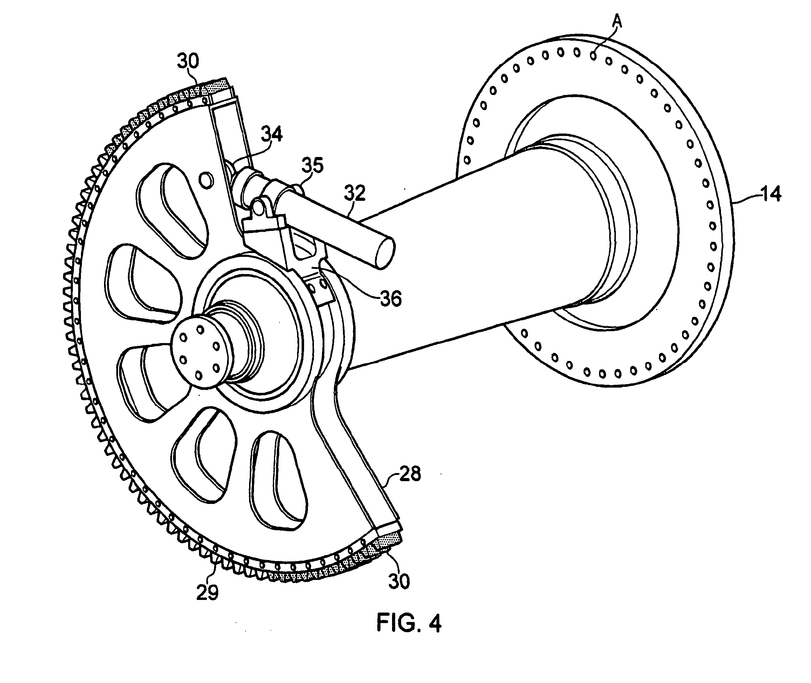

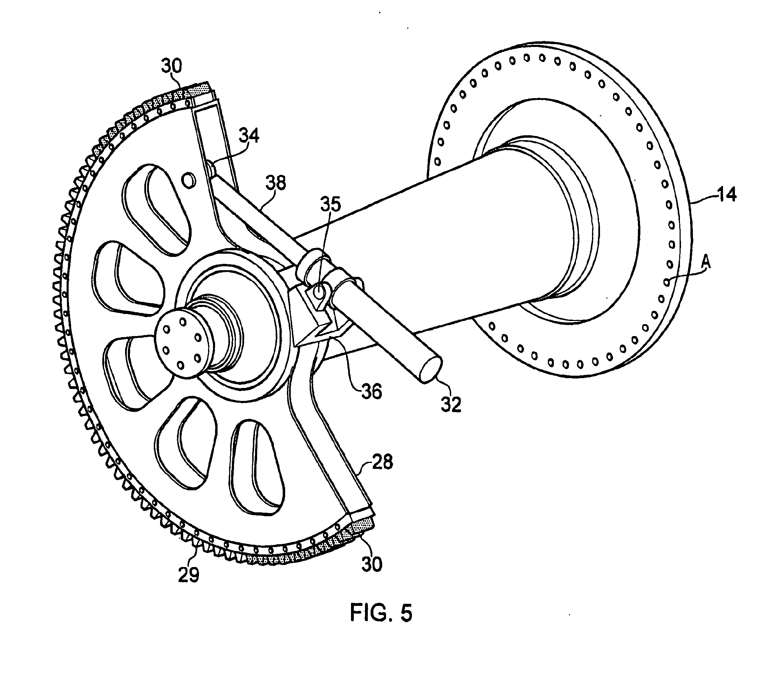

The actuator 32 comprises in the illustrated embodiment an actuator rod 38 which may be operated between a retracted state (see figure 4) and an extended state (see figure 5). The actuator 32 may be hydraulically operated, in which the actuator rod 38 is extended and retracted by manipulation of hydraulic pressure in a manner which is known in the art. In an alternative embodiment, the actuator 32 may be a solenoid actuator, in which extension and retraction of the actuator rod 38 is achieved by electric impulses. Hydraulic lines and control lines have been omitted from the figures for clarity of illustration and as these features are known in the art.

The actuator 32 thus serves as an additional pitch adjusting device, inasmuch as the spindle 14 (and thus a turbine blade attached to the spindle) may be rotated about a spindle longitudinal axis by an operation of the actuator 32. This pitch adjustment by means of the actuator 32 may thus be performed independently of the pitch adjustment described above with reference to the drive unit 18, bevel gear 22, 24 and toothed arc 28. The actuator 32 may thus serve as an auxiliary pitch adjusting device.

The pitch adjusting range achievable by means of the actuator 32 is in the illustrated embodiment limited by dimensional parameters such as the stroke length of the actuator rod 38, by the distance between the turbine blade spindle centre and the actuator connection point 35, and by the distance between the turbine blade spindle centre and the toothed arc connection point 34; denoted as "S", "a" and "b", respectively in figure 2.

The actuator 32 may thus serve as a means for fine-tuning the turbine pitch e.g when the toothed arc 28 is locked in position by the bevel gear arrangement as illustrated in figure 3. The two pitch adjusting means (i.e. the rotary toothed wheel 28 and the actuator 32 may thus be operated separately of one another, but the two pitch adjusting means may also be operated concurrently.

In one mode of operation of the device, the pitch is adjusted by means of the drive unit 18, bevel gear 22, 24 and toothed arc 28, as described above and illustrated by figure 3. In this configuration, the actuator 32 is fixed in the retracted state, i.e. the actuator rod 38 being retracted inside the actuator housing, and the rotation of the pitch adjusting axle 20 is directly transmitted to the spindle 14 via the fixed actuator 32, as explained above. Under certain circumstances it may be desirable or necessary to perform a pitch adjustment, to e.g. feather the turbine blades to substantially remove the thrust loads from the turbines. This may for instance be the case for a tidal current power plant when the water current velocity exceeds permissible design parameters and/or if the pitch adjusting gear 16 or associated components malfunction, in which case there is the additional need for a rapid pitch adjustment. Such pitch adjustment may thus be achieved by activating the actuator 32, by extending the actuator rod 38 such that the turbine blade spindle 14 is sufficiently rotated about its longitudinal axis.

Figure 4 illustrates the actuator 32 and actuator rod 38 in the retracted state, whereas figure 5 illustrates the actuator rod 38 in the extended state. The spindle's rotation about its longitudinal axis (and thus the turbine blade pitch adjustment) due to the actuation of the actuator 32 is indicated by the reference letter "A" in figures 4 and 5.

By a suitable dimensioning of the actuator, including the parameters identified in figure 2, such activation of the actuator will feather the turbine blades. The actuators may furthermore be constructed such that the actuator rod 38 is deployed rapidly. The actuator may thus comprise an explosive charge and/or springs, as the sole actuation means or in combination with the hydraulic or electrical actuation means described above. The actuator 32 may thus serve as a feathering device, and as an emergency feathering device. The actuator 32 thus provides a safety device, fulfilling a back-up function for the pitch adjusting gear 16.

Although the invention has been described with reference to an embodiment comprising two turbine blade spindles 14, the skilled person will understand that the invention applies to other quantities and arrangements of turbine blade spindles.

## Claims

1. A device for controlling a water current turbine blade pitch, comprising a pitch adjustment gear (16) and a toothed arc (28) which is supporting a turbine blade spindle (14) having a longitudinal axis for alignment with the turbine blade longitudinal axis, **characterized in that**
the spindle (14) is rotatably connected to the toothed arc (28); the actuator (32) is connected to the spindle (14) and via an actuation element (38) to the toothed arc (28); and the actuator (32) is operable to rotate the spindle (14) about a spindle longitudinal axis, whereby the turbine blade pitch may be adjusted by means of the actuator (32), independently of the pitch adjustment gear (16).

2. The device of claim 1, wherein the actuation element (38) is operable between a retracted state and an extended state, whereby said operation of the actuator (32) causes a rotation of the spindle (14) about a spindle longitudinal axis.

3. The device of claim 1 or claim 2, wherein the spindle (14) comprises a connection element (36) for connection to the actuator (32).

4. The device of claim 3, wherein the connection element (36) comprises a first pivotal connection means (35) for connection to the actuator (32).

5. The device of any of the claims 1 - 4, wherein the toothed arc (28) comprises a second pivotal connection means (34) for connection to the actuator (32).

6. The device of any of the claims 1 - 5, wherein the toothed arc (28), via a gear wheel (26) and a bevel gear (22, 24), is connected to a pitch adjusting drive unit (18).

7. The device of any of the claims 1-6, wherein the toothed arc (28) comprises two perforated walls separated by an internal compartment (33), and a connection element (36), arranged between parts of the two walls, is attached to the spindle (14) or formed integrally with the spindle and is pivotally connected to the actuator (32).

8. The device of any of the above claims, wherein the actuator (32) comprises a hydraulically operated actuator, or a solenoid actuator, and/or an actuator comprising one or more explosive charges or springs.

9. Use of the device as specified by any of claims 1 - 8, in a generator submerged in a body of water, for generating electricity from currents flowing past said submerged generator.

## Patentansprüche

1. Vorrichtung zum Einstellen eines Einstellwinkels eines Rotorblattes einer Wasserströmungsturbine, umfassend ein Mittel (16) zum Justieren des Einstellwinkels und einen gezahnten Bogen (28), der eine Rotorblattspindel (14) mit einer Längsachse zur Ausrichtung mit der Längsachse des Rotorblattes stützt, **dadurch gekennzeichnet, dass**
die Spindel (14) drehbar mit dem gezahnten Bogen verbunden ist;
der Aktor (32) mit der Spindel (14) sowie, über ein Aktorelement (38), mit dem gezahnten Bogen (28) verbunden ist; und dass der Aktor (32) betätigbar ist, die Spindel (14) um eine Spindellängsachse zu drehen, wobei der Einstellwinkel des Rotorblatts mittels des Aktors (32) unabhängig von den Mitteln (16) zum Justieren des Einstellwinkels justiert werden könnte.

2. Vorrichtung nach Anspruch 1, wobei das Aktorelement (38) zwischen einem eingefahrenen Zustand und einem ausgefahrenen Zustand betätigbar ist, wobei die Betätigung des Aktors (32) eine Drehung der Spindel (14) um eine Spindellängsachse bewirkt.

3. Vorrichtung nach Anspruch 1 oder 2, wobei die Spindel (14) ein Verbindungselement (36) zur Verbindung mit dem Aktor (32) umfasst.

4. Vorrichtung nach Anspruch 3, wobei das Verbindungselement (36) ein erstes Drehverbindungsmittel (35) zur Verbindung mit dem Aktor (32) umfasst.

5. Vorrichtung nach einem der vorangehenden Ansprüche 1-4, wobei der gezahnte Bogen (28) ein zweites Drehverbindungsmittel (34) zur Verbindung mit dem Aktor (32) umfasst.

6. Vorrichtung nach einem der vorangehenden Ansprüche 1-5, wobei der gezahnte Bogen (28) über ein Getrieberad (26) und ein Winkelgetriebe (22, 24) mit einer Antriebseinheit (18) zum Justieren des Einstellwinkels verbunden ist.

7. Vorrichtung nach einem der vorangehenden Ansprüche 1-6, wobei der gezahnte Bogen (28) zwei perforierte, durch eine interne Kammer (33) getrennte Seitenwände umfasst, und ein zwischen Teilen der zwei Wände angeordnetes Verbindungselement (36) an der Spindel (14) angebracht oder mit der Spindel integriert ausgebildet ist und drehbar mit dem Aktor (32) verbunden ist.

8. Vorrichtung nach einem der vorangehenden Ansprüche, wobei der Aktor (32) einen hydraulisch betätigbaren Aktor oder einen Magnetantrieb und/oder einen eine oder mehr explosive Ladungen oder Federn umfassenden Aktor umfasst.

9. Verwendung der durch einen der Ansprüche 1 bis 8 beschriebenen Vorrichtung, in einem in Wasser eingetauchten Generator zur Erzeugung von Elektrizität aus an dem Generator vorbei fließenden Strömen.

## Revendications

1. Dispositif pour régler un pas d'hélice de turbine pour courant d'eau comprenant un engrenage d'ajustement de pas (16) et un arc denté (28) qui supporte une tige d'hélice de turbine (14) ayant un axe longitudinal pour l'alignement avec l'axe longitudinal de l'hélice de turbine, **caractérisé en ce que** :
la tige (14) est raccordée de manière rotative à l'arc denté (28) ; l'actionneur (32) est raccordé à la tige (14) et via un élément d'actionnement (38) à l'arc denté (28) ;
et l'actionneur (32) peut fonctionner pour faire tourner la tige (14) autour d'un axe longitudinal de tige, moyennant quoi le pas d'hélice de turbine peut être ajusté au moyen de l'actionneur (32), indépendamment de l'engrenage d'ajustement de pas (16).

2. Dispositif selon la revendication 1, dans lequel l'élément d'actionnement (38) peut fonctionner entre un état rétracté et un état déployé, moyennant quoi ledit fonctionnement de l'actionneur (32) provoque une rotation de la tige (14) autour d'un axe longitudinal de tige.

3. Dispositif selon la revendication 1 ou la revendication 2, dans lequel la tige (14) comprend un élément de raccordement (36) pour le raccordement à l'actionneur (32).

4. Dispositif selon la revendication 3, dans lequel l'élément de raccordement (36) comprend des premiers moyens de raccordement pivotants (35) pour le raccordement à l'actionneur (32).

5. Dispositif selon l'une quelconque des revendications 1 à 4, dans lequel l'arc denté (28) comprend des seconds moyens de raccordement pivotants (34) pour le raccordement à l'actionneur (32).

6. Dispositif selon l'une quelconque des revendications 1 à 5, dans lequel l'arc denté (28), via un engrenage de réduction (26) et un engrenage conique (22, 24), est raccordé à une unité d'entraînement d'ajustement de pas (18).

7. Dispositif selon l'une quelconque des revendications 1 à 6, dans lequel l'arc denté (28) comprend deux parois latérales perforées séparées par un compartiment interne (33) et un élément de raccordement (36) agencé entre les parties des deux parois, est fixé à la tige (14) ou formé de manière solidaire avec la tige et est raccordé de manière pivotante à l'actionneur (32).

8. Dispositif selon l'une quelconque des revendications ci-dessus, dans lequel l'actionneur (32) comprend un actionneur hydraulique ou un actionneur à solénoïde, et/ou un actionneur comprenant une ou plusieurs charges explosives ou ressorts.

9. Utilisation du dispositif selon l'une quelconque des revendications 1 à 8, dans un générateur immergé dans un corps d'eau, pour générer de l'électricité à partir des courants s'écoulant au-delà dudit générateur immergé.
